Europäisches Patentamt

European Patent Office

Office européen des brevets

(19)

(11) Veröffentlichungsnummer: **0 277 257 B1**

(12) **EUROPÄISCHE PATENTSCHRIFT**

(45) Veröffentlichungstag der Patentschrift: **27.12.91**

(51) Int. Cl.⁵: **G05B 19/405**

(21) Anmeldenummer: **87101545.9**

(22) Anmeldetag: **05.02.87**

(54) **Vorrichtung zur Steuerung der Werkzeugstellung einer Werkzeugmaschine.**

(43) Veröffentlichungstag der Anmeldung:
**10.08.88 Patentblatt 88/32**

(45) Bekanntmachung des Hinweises auf die
Patenterteilung:
**27.12.91 Patentblatt 91/52**

(84) Benannte Vertragsstaaten:
**CH DE FR GB IT LI**

(56) Entgegenhaltungen:
**DE-A- 3 232 645**
**GB-A- 2 140 730**
**US-A- 4 008 461**

(73) Patentinhaber: **MOOG GmbH**
**Hanns-Klemm-Strasse 28**
**W-7030 Böblingen(DE)**

(72) Erfinder: **Handte, Herbert**
**Holzwiesenstrasse 2**
**W-7024 Filderstadt 4(DE)**

(74) Vertreter: **Patentanwälte Grünecker, Kinkeldey, Stockmair & Partner**
**Maximilianstrasse 58**
**W-8000 München 22(DE)**

## Beschreibung

Die Erfindung bezieht sich auf eine Vorrichtung zur Steuerung der Werkzeugstellung einer Werkzeugmaschine, enthaltend eine Datenspeichervorrichtung zur Speicherung von Werkzeugstellungsdaten in vorgegebener Reihenfolge und von Werkzeugverstellgeschwindigkeitsdaten, eine Einrichtung zum Eingeben der Werkzeugstellungsdaten und der Werkzeugverstellgeschwindigkeitsdaten in die Datenspeichervorrichtung, eine Einrichtung zum Abrufen der Daten zur Steuerung der Werkzeugbewegung in durch die Werkzeugstellungsdaten vorgegebene Werkzeugstellungen mit durch die Werkzeugverstellgeschwindigkeitsdaten bestimmten Verstellgeschwindigkeiten, eine Änderungsspeichereinrichtung zur Aufnahme von Änderungsdaten zur Änderung von Stellungsdaten und/oder von Verstellgeschwindigkeitsdaten und eine Verknüpfungseinrichtung, die mit der Änderungsspeichereinrichtung und der Datenspeichereinrichtung verbunden ist, um geänderte Daten für die Steuerung der Werkzeugstellung zu erzeugen. Eine solche Vorrichtung ist aus der US-A-4 008 461 bekannt.

Bei modernen Werkzeugmaschinensteuerungen, beispielsweise bei kunststoffverarbeitenden Maschinen, wie Blasform-, Spritzgießmaschinen usw., erfolgt die Ein- und Ausgabe der Prozeßparameter mit Hilfe einer Tastatur und eines Sichtgerätes. Das Sichtgerät kann einen Bildschirm enthalten oder, bei einfacher Ausführung, eine Zeilenanzeige aus Leuchtdioden, Flüssigkristallelementen oder dergleichen. Die Prozeßparameter, d.h. die Daten entsprechend der Stellungen, die das Werkzeug während des Prozesses einnehmen soll, und Daten bezüglich der Verstellgeschwindigkeiten, mit denen das Werkzeug zwischen den einzelnen vorgegebenen Positionen zu verstellen ist, werden vom Bedienungspersonal über die Tastatur eingegeben und auf der Anzeigeeinrichtung beispielsweise tabellarisch angezeigt. Soll ein Parameter in der Tabelle geändert werden, so kann die Parameterauswahl durch die Eingabe der entsprechenden laufenden Nummer oder durch die Positionierung einer Markierung auf den entsprechenden Daten, womit gleichzeitig eine Markierung des entsprechenden Speicherplatzes in der Speichervorrichtung verbunden ist, erfolgen. Durch Neueingabe von Daten mittels der Tastatur läßt sich dann der ausgewählte Parameter überschreiben.

Bei vielen Prozessen, wie beispielsweise in der Kunststoffverarbeitung, können viele Prozeßparameter nicht im voraus exakt vorgegeben, beispielsweise berechnet werden. Vielmehr müssen sie durch langwierige Versuche ermittelt werden, wozu die Parameter zunächst grob eingegeben und bei laufender Produktion so lange verändert werden, bis die optimale Einstellung gefunden ist. Dazu wird häufig auf Erfahrungswerte zurückgegriffen, wobei der jeweils angesprochene Parameter entweder um einen Absolutbetrag oder um einen bestimmten Bruchteil seines aktuellen Wertes verändert werden soll. Dazu muß jedoch der aktuelle Parameter abgelesen und nach Ausführung eines seinen aktuellen Wert berücksichtigenden Rechenvorgangs neu eingegeben werden. Dies ist zeitraubend, mühsam und eine Quelle von Fehlern.

In der Praxis wird deshalb häufig auf eine solche Berechnung verzichtet und der jeweils neue Wert des betreffenden Parameters wird gschätzt und neu eingegeben. Auch solches Schätzen ist jedoch häufig Grund für viele unnötige, da erfolglose Versuche. Darüber hinaus ist auch die Schätzmethode zeitaufwendig, da der neu geschätzte Wert des Parameters in seiner Gesamtheit neu eingegeben werden muß, wozu mitunter sehr viele Tasten der Tastatur gedrückt werden müssen.

Aus der US-A-4 008 461 ist eine numerische Werkzeugmaschinensteuerung bekannt, bei der die Steuerdaten auf einem Lochstreifen gespeichert sind und von diesem in einen Pufferspeicher eingelesen werden. Um zu vermeiden, daß bei allfälligen Änderungen von Daten ein neuer Lochstreifen erstellt werden muß, werden die Änderungsdaten in einen Änderungsspeicher eingegeben und ihnen Adressen zugeordnet, die sich auf die zu ändernden Lochstreifendaten beziehen. Bei der Steuerung der Werkzeugmaschine werden dann die Lochstreifendaten mit den ihnen zugeordneten Änderungsdaten kombiniert. Die Lochstreifendaten selbst bleiben aber unverändert. Bei der Verwaltung von Maschinensteuerprogrammen ist es daher erforderlich, die Zuordnung von Lochstreifen und Änderungsdaten zu beachten. Hierbei können sich leicht Fehler einschleichen, die zur Folge haben, daß entweder mit ungeänderten Daten, d.h. ausschließlich mit den Lochstreifen gearbeitet wird oder daß falsche Änderungsdaten verwendet werden.

Aus der DE-A-32 32 645 ist eine Schaltungsanordnung für eine numerische Steuerung mit funktionsbezogenen, durch ein Betriebssystem festgelegten Anzeige-, Bedien- und Steuerelementen bekannt, die für individuelle Aufgaben des Anwenders genutzt werden kann. Sie umfaßt einen zusätzlichen Speicher für vom Anwender erstellte individuelle Programme, dessen Datenleitungen und die Datenleitungen des Speichers für das Betriebssystem über eine steuerbare Weiche an eine Logikeinheit angeschlossen sind. Mittel zur Aktivierung des zusätzlichen Speichers sind über einen ersten Ausgang der Logikeinheit mit einem Steuereingang der steuerbaren Weiche und über einen zweiten Ausgang mit einem Steuereingang einer mit dem Speicher für das Betriebssystem und dem zusätzlichen Speicher verbundenen Speichersteuereinheit verbunden.

Der Erfindung liegt die Aufgabe zugrunde, eine Vorrichtung der eingangs genannten Art anzugeben, mit der der Wert eines ausgewählten der eingegebenen Werkzeugstellungs- oder Werkzeugverstellgeschwindigkeitsdaten einfach, schnell und dauerhaft geändert werden kann und die eine einfache Verwaltung von Werkzeugmaschinenprogrammdaten ermöglicht.

Diese Aufgabe wird durch die kennzeichnenden Merkmale des Anspruchs 1 gelöst. Vorteilhafte Ausgestaltungen der Erfindung sind Gegenstand der Unteransprüche.

Die Erfindung ermöglicht es, den Wert eines der Steuerungsparameter (Werkzeugstellungsdaten, Werkzeugverstelldaten) zu verändern, ohne daß dazu der aktuelle Wert dieses Parameters von der Bedienperson berücksichtigt zu werden braucht. Die Bedienperson gibt nur einfach entweder einen absoluten Änderungsbetrag ein sowie dem zugehörigen Befehl, diesen Betrag zum aktuellen Wert hinzuzuzählen oder abzuziehen, oder sie gibt eine Prozentzahl ein sowie den zugehörigen Befehl, den eingegebenen Prozentsatz zum aktuellen Wert hinzuzuzählen oder davon abzuziehen. Die Vorrichtung führt dann selbsttätig eine entsprechende Berechnung unter Berücksichtigung des aktuellen Wertes des ausgewählten Parameters durch und schreibt den berechneten neuen Wert in den von der Markierung bezeichneten Speicher ein. Es ist jedoch auch möglich, einen neuen Wert des Parameters unmittelbar einzugeben, d.h. auf die Rechenmöglichkeit der Vorrichtung zu verzichten. Die erfindungsgemäße Vorrichtung erspart Zeit und Fehler, so daß die optimale Parametereinstellung wesentlich schneller gefunden und ein Übermaß an produziertem Ausschuß vermieden wird.

Dabei kann vorteilhafterweise die Vorrichtung auch mit einer Rundungseinrichtung verbunden sein, die den neuen Parameter automatisch auf- oder abrundet.

Die Erfindung soll nachfolgend unter Bezugnahme auf ein in den Zeichnungen dargestelltes Ausführungsbeispiel näher erläutert werden. Es zeigt:

Fig. 1   die Bedientafel der Steuerungsvorrichtung nach der Erfindung, und

Fig. 2   ein Blockschaltbild der Steuerungsvorrichtung.

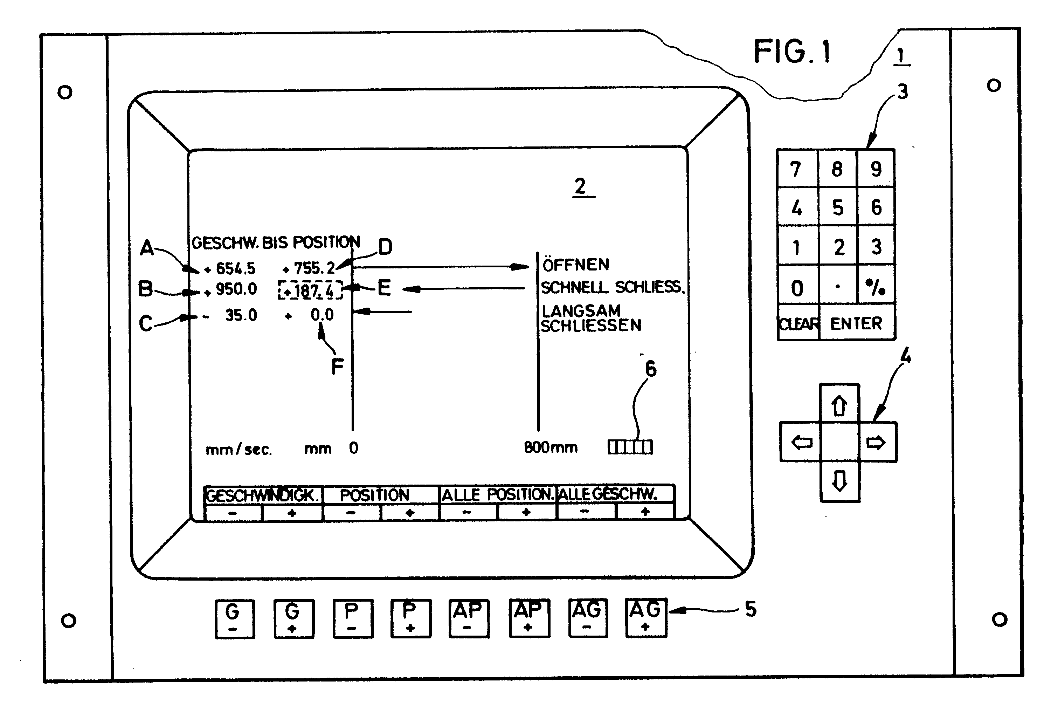

In Fig. 1 erkennt man die Bedienungstafel der Steuervorrichtung mit einem Bildschirm 2 als Anzeigeeinrichtung, einer numerischen Tastatur 3 mit zehn Zifferntasten, einer Kommataste, einer Prozenttaste, einer Löschtaste "CLEAR" und einer Eingabetaste "ENTER". Weiterhin erkennt man eine Verschiebetastatur 4 zum Verschieben eines Cursors auf dem Bildschirm 2 entsprechend den auf den Tasten der Verschiebetastatur 4 enthaltenen Symbolen. Unter dem Bildschirm 2 ist eine Funktionstastatur 5 angeordnet, enthaltend im vorliegenden Beispiel acht Tasten, die verschiedenen Funktionen zugeordnet sind, die auf dem Bildschirm 2 mit "Geschwindigkeit -", "Geschwindigkeit +", "Position -", "Position +", "alle Positionen -", "alle Positionen +", "alle Geschwindigkeiten -" und "alle Geschwindigkeiten +" angegeben sind. Zum besseren Verständnis sind die zugehörigen Tasten der Funktionstastatur 5 mit "G -", "G +", "P -", "P +", "AP -", "AP +", "AG -" und "AG +" bezeichnet.

Der Bildschirm 2 enthält ein Anzeigefeld 6, in welchem die an der numerischen Tastatur 3 eingegebenen Daten, die ggf. Prozentsatzdaten sein können, angezeigt werden.

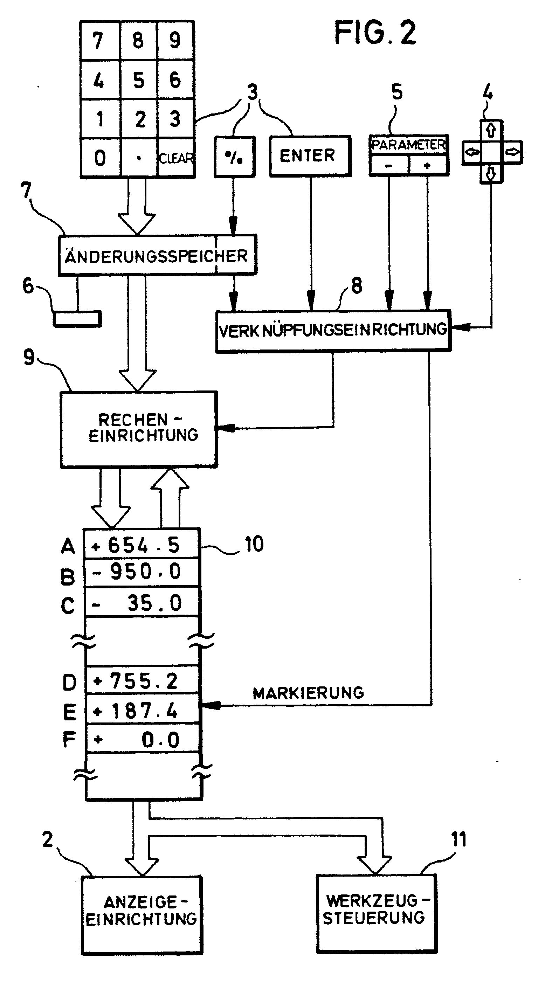

Fig. 2 zeigt ein Blockschaltbild der Steuerungsvorrichtung nach der Erfindung. In ihr erkennt man die numerische Tastatur 3, die mit einem Änderungsdatenspeicher 7 verbunden ist. Weiterhin ist eine Verknüpfungseinrichtung 8 vorgesehen, die Eingänge für vom Änderungsdatenspeicher, von der numerischen Tastatur 3, der Verschiebetastatur 4 und der Funktionstastatur 5 gelieferte Daten aufweist. Weiterhin erkennt man eine Recheneinrichtung 9, die von dem Änderungsdatenspeicher 7 Änderungsdaten numerischer Art und von der Verknüpfungseinrichtung 8 Verarbeitungsbefehle enthält, die sich darauf beziehen, welche Art von Änderungen mit Hilfe der aus dem Änderungsdatenspeicher 7 stammenden Daten ausgeführt werden soll. Die Recheneinrichtung 9 ist mit einem Datenspeicher 10 verbunden, der die auf dem Bildschirm dargestellten Daten hinsichtlich Geschwindigkeit und Position enthält und mit dem ein Datenaustausch stattfindet. Der Datenspeicher 10 wird zum Zwecke der Adressierung bzw. Markierung eines bestimmten Speicherplatzes von der Verknüpfungseinrichtung angesteuert.

Der Datenspeicher 10 ist mit dem Bildschirm 2 sowie einer Werkzeugsteuereinrichtung 11 verbunden. Das Anzeigefeld 6 erhält sein darzustellende Information vom Änderungsdatenspeicher 7.

Die Funktionsweise dieser Anordnung soll nachfolgend erläutert werden.

Auf dem Bildschirm 2 werden, gesteuert durch die Steuerungsvorrichtung, Verstellgeschwindigkeiten angezeigt, von denen einige beispielhaft mit A, B, C angegeben sind, und Werkzeugpositionen, die beispielhaft mit D, E und F angegeben sind. Außerdem sind auf dem Bildschirm 2 rechts neben den vorgenannten Parametern A bis F graphisch die Verschiebewege dargestellt, und rechts daneben ist die Tätigkeit angegeben, die das Werkzeug, im vorliegenden Falle eine Blasform zum Blasen von Taschen aus einem schlauchförmigen Kunststoffmaterial, ausführt.

Die in der Zeichnung wiedergegebenen Parameter A bis F sind mittels der numerischen Tastatur 3 zuvor in den Datenspeicher 10 eingegeben worden. Im vorliegenden Beispiel ist mittels der Verschiebetastatur 4 für den Cursor der Cursor, der auf dem Bildschirm 2 mit gestrichelten Linien dargestellt ist, auf den Parameter E eingestellt worden.

Wenn der vorgenannte Parameter E von dem angegebenen Wert von 187,4 mm auf beispielsweise 234,6 mm abgeändert werden soll, dann wird zunächst durch Drücken der entsprechenden Tasten der Verschiebetastatur 4 der Cursor auf das Feld für den Parameter E gebracht, wie im vorliegenden Fall dargestellt. Dadurch wird zugleich der zugehörige Speicherplatz im Datenspeicher 10 adressiert. Anschließend werden die Tasten "2", "3" und "4" sowie "," und "6" der numerischen Tastatur 3 gedrückt und im Anzeigefeld 6 angezeigt. Nach Drücken der Taste "ENTER" wird der so eingetippte Wert 234,6 in den Speicherplatz für den Parameter E im Datenspeicher 10 übernommen und auf dem Bildschirm 2 entsprechend angezeigt. Dies wäre mit der üblichen Eingabe bei bekannten Steuerungsvorrichtungen vergleichbar.

Soll hingegen beispielsweise der dargestellt Wert für den Parameter D von 755,2 mm um 1/10 bzw. 10% verkleinert werden, dann sind die folgenden Tasten zu drücken: die Tasten "1" und "0" sowie "%" der numerischen Tastatur 3. Auf dem Bildschirm erscheint rechts unten am Anzeigefeld 6 die Größe "10%". Der Cursor wird dann mit Hilfe der Verschiebetastatur 4 auf die dem Parameter D entsprechende Position gebracht. Anschließend wird die Funktionstaste "P -" gedrückt.

In der Recheneinrichtung 9 wird nun eine Berechnung durchgeführt, gemäß welcher von dem ursprünglichen Wert für den Parameter D, der aus dem Datenspeicher 10 beschafft wurde, 10% desselben abgezogen werden. Der neu berechnete Wert von 679,68 mm wird automatisch gerundet und als neuer Wert 679,7 an den Speicherplatz für den Parameter D im Datenspeicher 10 übernommen und auf dem entsprechenden Platz auf dem Bildschirm 2 zur Anzeige gebracht.

Soll nun ein weiterer Parameter ebenfalls um 10% verändert werden, so braucht nur noch der Cursor mit Hilfe der Verschiebetastatur 4 auf das entsprechende Feld auf dem Bildschirm 2 gebracht zu werden, beispielsweise auf das dem Parameter E entsprechende Feld. Nach Drücken der Funktionstaste "P -" (wenn der Wert um 10% vermindert werden soll) wird dieselbe Berechnung in bezug auf den Parameter E ausgeführt und der neu berechnete Wert 168,66 mm wird auf 168,7 gerundet und in den dem Parameter E entsprechenden Speicherplatz im Datenspeicher 10 eingegeben und auf dem Bildschirm 2 zur Anzeige gebracht.

Soll hingegen eine Position um 10% erhöht werden, so wird nach Hinsteuern des Cursors auf den entsprechenden Parameter die Funktionstaste "P +" gedrückt und es wird der entsprechende Wert um 10% erhöht. Es ist demnach nicht notwendig, den Prozentsatz erneut einzugeben, wenn mehrere Parameter um den gleichen Prozentsatz verändert werden sollen, handele es sich dabei um eine Vergrößerung oder eine Verminderung.

Auf dieselbe Weise können auch die Geschwindigkeitsparameter A, B und C verändert werden, wobei dann die Tasten "G -" bzw. "G +" gedrückt werden müssen.

Soll einer der Parameter nicht um, sondern auf beispielsweise 108% vergrößert werden, dann werden hierzu die Tasten "1", "0", "8" und "%" der numerischen Tastatur 3 gedrückt. Das Anzeigefeld 6 zeigt dann "108%" an. Anschließend ist der Cursor auf das gewünschte Parameterfeld zu positionieren. Es braucht dann nur noch die Taste "ENTER" der numerischen Tastatur 3 gedrückt zu werden, um eine Neuberechnung des Wertes des angesteuerten Parameters unter Verwendung des alten Wertes auszulösen.

Mit Hilfe der Erfindung sind auch Änderungen um Absolutbeträge möglich, ohne daß hierzu die Bedienperson den aktuellen Wert des ausgewählten Parameters berücksichtigen muß. Soll beispielsweise der Parameter E um 25 mm erhöht werden, so wird wie folgt vorgegangen: zunächst werden die Tasten "2" und "5" der numerischen Tastatur 3 gedrückt. Das Anzeigefeld 6 zeigt dann "25". Sodann wird der Cursor auf das ausgewählte Parameterfeld entsprechend dem Parameter E positioniert. Nach Drücken der Funktionstaste "P +" wird in der Recheneinrichtung 10 eine Berechnung ausgeführt, in welcher der eingegebene Betrag von 25 mm zu dem zuvor geltenden Wert von 187,4 hinzugezählt wird. Das ausgerechnete Ergebnis von 212,4 mm wird als neuer Wert an den dem Parameter E entsprechenden Speicherplatz im Datenspeicher 10 übernommen und auf dem Bildschirm 2 zur Anzeige gebracht.

Es sei hervorgehoben, daß die Reihenfolge hinsichtlich der Eingabe der Veränderungswerte und der Verstellung des Cursors auch vertauscht werden kann, d.h., man kann zunächst den Cursor auf den ausgewählten Parameter steuern und anschließend die Dateneingabe vornehmen.

Ist ein Parameter durch Eingabe eines Änderungswertes als Absolutwert verändert worden, so kann diese Änderung anschließend durch Drücken der entgegengesetzten Funktionstaste aus der Funktionstastatur 5 rückgängig gemacht werden. Ist demnach zuvor die Taste "P +" gedrückt worden, so ist zur Rückgängigmachung der Änderung die Taste "P -" zu drücken.

Entsprechende Überlegungen gelten auch hinsichtlich der Änderung von Geschwindigkeitsparametern A bis C, wozu die Funktionstasten "G -" bzw. "G +" zu drücken sind.

Wenn eine Gruppe von Parametern, beispielsweise wenn alle Werkzeugstellungsparameter um einen gleichen Betrag oder einen gleichen Prozentsatz geändert werden sollen, dann ist es nicht notwendig, den Cursor auf einen bestimmten Parameter zu steuern. Nach Eingabe des Änderungswertes bzw. Änderungsprozentsatzes ist dann lediglich die Funktionstaste "AP -" (im Falle einer Verkleinerung) oder "AP +" (im Falle einer Vergrößerung) zu drücken. Entsprechendes gilt für die Verstellung der Geschwindigkeitsparameter. Nach Drücken dieser Funktionstaste werden die Berechnungen für sämtliche der so angesprochenen Parameter in der Steuerungsvorrichtung automatisch ausgeführt.

Es versteht sich, daß die Erfindung nicht auf die Steuerung von kunststoffverarbeitenden Maschinen, wie Blasformmaschinen oder Spritzgießmaschinen beschränkt ist. Die zuvor erwähnten Anwendungsformen sind nur als Beispiele genannt. Es ist auch möglich, andere Arten von Werkzeugmaschinen mittels der erfindungsgemäßen Steuerungsvorrichtung zu steuern. Auch kann die Einrichtung zur Eingabe weiterer oder anderer Parameter herangezogen werden, wie z.B. Temperatur, Druck, Zeit usw..

## Patentansprüche

1. Vorrichtung zur Steuerung der Werkzeugstellung einer Werkzeugmaschine, enthaltend eine Datenspeichervorrichtung (10) zur Speicherung von Werkzeugstellungsdaten in vorgegebener Reihenfolge und von Werkzeugverstellgeschwindigkeitsdaten, eine Einrichtung (3) zum Eingeben der Werkzeugstellungsdaten und der Werkzeugverstellgeschwindigkeitsdaten in die Datenspeichervorrichtung, eine Einrichtung zum Abrufen der Daten zur Steuerung der Werkzeugbewegung in durch die Werkzeugstellungsdaten vorgegebene Werkzeugstellungen mit durch die Werkzeugverstellgeschwindigkeitsdaten bestimmten Verstellgeschwindigkeiten, eine Änderungsspeichereinrichtung (7) zur Aufnahme von Änderungsdaten zur Änderung von Stellungsdaten und/oder von Verstellgeschwindigkeitsdaten und eine Verknüpfungseinrichtung (8), die mit der Änderungsspeichereinrichtung (7) und der Datenspeichereinrichtung (10) verbunden ist, um geänderte Daten für die Steuerung der Werkzeugstellung zu erzeugen, **gekennzeichnet durch** eine Anzeigeeinrichtung (2) zur optischen Darstellung der eingegebenen Werkzeugstellungsdaten und Werkzeugverstellgeschwindigkeitsdaten und eine Einrichtung zur Markierung ausgewählter der zur Darstellung gebrachten Stellungsdaten und Verstellgeschwindigkeitsdaten auf der Anzeigeeinrichtung (2) und gleichzeitig des zugehörigen Speicherplatzes in der Datenspeichervorrichtung (10), Befehlseingabeeinrichtungen, mit denen der Verknüpfungseinrichtung (8) wahlweise einer der Befehle "Prozentuale Änderung", "Absolute Änderung" und "Überschreiben mit geändertem Wert" zuführbar ist, und eine von der Verknüpfungseinrichtung (8) angesteuerte Recheneinrichtung (9), die wenigstens die jeweils markierten Daten entsprechend dem eingegebenen Befehl in der Datenspeichervorrichtung (10) ändert.

2. Vorrichtung nach Anspruch 1, **dadurch gekennzeichnet,** daß die Befehlseingabeeinrichtung eine Einrichtung zum Eingeben des Vorzeichens der Änderung getrennt von der Änderungsgröße aufweist.

3. Vorrichtung nach Anspruch 1 oder 2, **dadurch gekennzeichnet,** daß die Befehlseingabeeinrichtung eine Einrichtung (AP -, AP +, AG -, AG +) zum Eingeben eines alle Stellungsdaten oder Verstellgeschwindigkeitsdaten entsprechend der eingegebnen Änderung ändernden Befehls aufweist.

## Claims

1. Apparatus for controlling the position of a tool in a machine tool, comprising a data storage means (10) for storing tool position data in predetermined sequence and tool adjustment speed data, means (3) for inputting the tool position data and the tool adjustment speed data into the data storage means, means for retrieving the data to control the tool movement into positions predetermined by the tool position data, at adjustment speeds determined by the tool adjustment speed data, change storage means (7) to receive change data for changing position data and/or adjustment speed date, and logic means (8) connected to the change storage means (7) and the data storage means (10) to generate changed data for controlling the tool position, characterised by a display means (20) for optical display of the inputted tool position data and tool adjustment speed data and means for marking selected data out of the displayed position data and adjustment speed data on the display means (2) and, at the same time, the associated storage location in the data storage means (10), command inputting means whereby one of the commands "percentage change", "absolute change" and "over-write with changed value" can be selectively fed to the logic means (8), and computer means (9) triggered by the logic means (8) to change at least the marked data at any time in accordance with the inputted command in the data storage means (10).

2. Apparatus according ot claim 1, characterised in that the command inputtting means comprises means for inputting the sign of the change separately from the change magnitude.

3. Apparatus according to claim 1 or 2, characterised in that the command inputting means comprises means (AP -, AP +, AD -, AD +) for inputting a command which changes all the position data or adjustment speed data in accordance with the inputted change.

**Revendications**

1. Appareil pour commander la position d'outil d'une machine-outil, contenant une mémoire de données (10) pour mémoriser des données de positions d'outil dans une séquence prédéterminée et de données de vitesses de manoeuvre d'outil, un dispositif (3) pour introduire les données de positions d'outil et les données de vitesses de manoeuvre d'outil dans la mémoire de données, un dispositif pour extraire les données en vue d'une commande du mouvement d'outil jusque dans des positions d'outil prédéterminées par les données de positions d'outil avec des vitesses de manoeuvre définies par les données de vitesses de manoeuvre d'outil, une mémoire de modifications (7) pour recevoir des données de modification servant à la modification de données de positions et/ou de données de vitesses de manoeuvre ainsi qu'un dispositif de combinaison (8), qui est relié à la mémoire de modifications (7) et à la mémoire de données (10) de façon à produire des données modifiées pour la commande de la position d'outil, caractérisé en ce qu'il est prévu un dispositif d'affichage (2) pour une représentation optique des données de positions d'outil introduites et des données de vitesses de manoeuvre d'outil introduites ainsi qu'un dispositif pour un repérage sur le dispositif d'affichage (2) de données de positions sélectionnées qui sont affichées ainsi que de données de vitesses de manoeuvre qui sont affichées, et simultanément un repérage de l'emplacement correspondant de mémorisation dans la mémoire de données (10), des dispositifs d'entrée d'ordres à l'aide desquels le dispositif de combinaison (8) peut recevoir sélectivement un des ordres " modification proportionnelle", "modification absolue" et " correction avec une valeur modifiée ", ainsi qu'un calculateur (9), commandé par le dispositif de combinaison (8) et qui modifie au moins les données respectivement repérées en correspondance avec l'ordre introduit dans la mémoire de données (10).

2. Appareil selon la revendication 1, caractérisé en ce que le dispositif d'entrée d'ordres comporte un dispositif pour introduire le signe de la modification, séparément de la grandeur de modification.

3. Appareil selon la revendication 1 ou 2, caractérisé en ce que le dispositif d'entrée d'ordres comporte un dispositif (AP-, AP +, AG-, AG +) pour introduire un ordre modifiant toutes les données de positions ou les données de vitesses de manoeuvre en correspondance avec la modification introduite.

FIG.1

*1*

3

*2*

| 7 | 8 | 9 |
| 4 | 5 | 6 |
| 1 | 2 | 3 |
| 0 | . | % |
| CLEAR | ENTER | |

GESCHW. BIS POSITION

A ◆ 654.5 ◆ 755.2 D

B ◆ 950.0 ◆ 187.4 E

C - 35.0 ◆ 0.0

F

ÖFFNEN

SCHNELL SCHLIESS,

LANGSAM
SCHLIESSEN

6

mm/sec.   mm   0                    800mm

| GESCHWINDIGK. | | POSITION | | ALLE POSITION. | | ALLE GESCHW. | |
| - | + | - | + | - | + | - | + |

4

| G − | G + | P − | P + | AP − | AP + | AG − | AG + |

5

EP 0 277 257 B1

# FIG. 2